# EUROPÄISCHE PATENTSCHRIFT

(11) **EP 2 063 980 B1**
(45) Veröffentlichungstag und Bekanntmachung des Hinweises auf die Patenterteilung: **14.05.2014**
(21) Anmeldenummer: 07786456.9
(22) Anmeldetag: 31.07.2007
(51) Int. Cl.: B01D 67/00, C08J 5/22, C09J 9/00

(54) **ISOPORÖSE MEMBRAN UND VERFAHREN ZU IHRER HERSTELLUNG**
ISOPOROUS MEMBRANE AND METHOD OF PRODUCTION THEREOF
MEMBRANE ISOPOREUSE ET SON PROCÉDÉ DE FABRICATION

(30) Priorität: 22.09.2006 DE 102006045282
(43) Veröffentlichungstag der Anmeldung: 03.06.2009
(73) Patentinhaber: Helmholtz-Zentrum Geesthacht Zentrum für Material- und Küstenforschung GmbH, 21502 Geesthacht (DE)
(72) Erfinder: PEINEMANN, Klaus-Viktor, 21502 Geesthacht (DE); ABETZ, Volker, 21335 Lüneburg (DE); SIMON, Peter, F. W., 21465 Reinbek (DE); JOHANNSEN, Greta, 21522 Hohnstorf (DE)
(74) Vertreter: Grebner, Christian Georg Rudolf
(86) Internationale Anmeldenummer: PCT/EP2007/006759
(87) Internationale Veröffentlichungsnummer: WO 2008/034487

(56) Entgegenhaltungen:
- WO-A-03/062493
- DE-A1- 4 241 479
- US-A- 3 901 810
- US-A- 3 945 926
- US-A- 4 160 791
- US-A- 5 834 583
- ROUX ET AL: "Hydrophilisation of polysulphone ultrafiltration membranes by incorporation of branched PEO-block-PSU copolymers" 1. Mai 2006 (2006-05-01), JOURNAL OF MEMBRANE SCIENCE, ELSEVIER SCIENTIFIC PUBL.COMPANY. AMSTERDAM, NL, PAGE(S) 8-15 , XP005357841 ISSN: 0376-7388 Seite 277, Spalte 1 Seite 278, Spalten 1,2 Seite 280, Spalte 2 Tabelle 1
- HANCOCK L F L F ET AL: "Hydrophilic, semipermeable membranes fabricated with poly(ethylene oxide)-polysulfone block copolymer" BIOMATERIALS, ELSEVIER SCIENCE PUBLISHERS BV., BARKING, GB, Bd. 21, Nr. 7, April 2000 (2000-04), Seiten 725-733, XP004188886 ISSN: 0142-9612
- KNOELL T: "Biofouling potentials of microporous membranes containing a sulfonated polyether-ethersulfone/polyethersulfone block copolymer" 1999, JOURNAL OF MEMBRANE SCIENCE, ELSEVIER SCIENCE, AMSTERDAM, NL, PAGE(S) 117-138 , XP002148291 ISSN: 0376-7388 Seite 119, Spalte 1, Absatz 2 Abbildung 4 Tabellen 1,2

## Beschreibung

Die Erfindung betrifft ein Verfahren zur Herstellung einer isoporösen integral-asymmetrischen Polymermembran, nämlich einer Ultrafiltrationsmembran oder Nanofiltrationsmembran, sowie eine nach diesem Verfahren hergestellte isoporöse integral-asymmetrische Polymermembran und die Verwendung einer solchen isoporösen integral-asymmetrischen Polymermembran zur Ultrafiltration oder zur Nanofiltration.

Für die Ultrafiltration werden heutzutage überwiegend Membranen eingesetzt, die nach einem so genannten Phaseninversionsverfahren hergestellt werden. Diese Membranen weisen üblicherweise eine mehr oder weniger große statistische Streuung bei der Verteilung der Porengröße auf, vgl. S. Nunes, K.-V. Peinemann (HrG.): Membrane Technology in the Chemical Industry, Wiley-VCH, Weinheim 2006, S. 23-32. Eine breite Streuung in der Verteilung der Porengröße hat zwei Nachteile: Zum einen lässt eine solche Membran keine präzise Trennung eines Stoffgemisches zu und zum anderen neigt eine solche Membran zum so genannten Fouling. Hierunter versteht man ein schnelles Verblocken der großen Poren, da ein Großteil der durch die Membran tretenden Flüssigkeit zunächst durch die großen Poren tritt. Seit einiger Zeit wird daher versucht, isoporöse Membranen herzustellen, d.h. Membranen mit einer geringen Streuung in der Verteilung ihrer Porengröße.

Es sind insbesondere die folgenden Verfahren bekannt:
Isoporöse Membranen können durch die Verwendung von Bakterien-Hüllen, so genannten S-layers, gefertigt werden, vgl. Sleytr et al.: Isoporous ultrafiltration membranes from bacterial cell envelope layers, Jounal of Membrane Science 36, 1988. Dabei hat sich herausgestellt, dass diese Membranen sehr schwer in großer Menge herzustellen und das sie nicht langzeitstabil sind.

Membranen mit einer geringen Streuung bei der Verteilung ihrer Porengröße können auch durch elektrolytische Oxidation von Aluminium gefertigt werden, vgl. R.C. Furneaux et al.: The formation of controlled porosity membranes from anodically oxidized aluminium, Nature 337, 1989, S. 147 - 149. Diese Membranen werden beispielsweise unter der Handelsbezeichnung Anopore^{®} angeboten. Als bedeutender Nachteil dieser Membranen erweist sich, dass sie sehr brüchig und sehr teuer sind.

Isoporöse Filtermembranen lassen sich außerdem durch lithographische Verfahren, wie beispielsweise die Interferenz-Lithographie, erzeugen, vgl. Kuiper et al: Development and applications of very high flux microfiltration membranes, Journal of Membrane Science 150, 1998, S. 1 - 8. In diesem Fall werden die so erzeugten Mikrofiltrationsmembranen auch als Mikrosiebe bezeichnet. Es lassen sich auf diese Weise allerdings keine Membranen mit Poren von einem Durchmesser kleiner als 1µm erzeugen. Das Herstellungsverfahren ist allerdings aufwändig, und die Membranen sind teuer.

Weiterhin ist es bekannt, isoporöse Membranen durch so genannte Breath-Figures herzustellen, vgl. M. Srinivasaro et al.: Threedimensionally ordered array of air bubbles in a polymer film, Science 292, 2001, S. 79 - 83. Hierbei wird ein feuchter Gasstrom kontrolliert über einen lösemittelhaltigen Polymerfilm geleitet. Die Poren entstehen durch Kondensation von Wassertröpfchen auf der Oberfläche des Polymerfilms. Auch hier ist es nicht möglich, Poren mit einem hinreichend geringen Durchmesser zu erhalten.

Insbesondere die großtechnische Herstellung von Membranen ist schwierig und teuer. Ein jüngeres Verfahren zur Herstellung isoporöser Membranen beruht auf der Fähigkeit zur Selbstorganisation von Blockcopolymeren, vgl. T. P. Russel et al: Nanoporous membranes with ultrahigh selectivity and flux for the filtration of viruses, Advanced Materials 18, 2006, S. 709 - 712. Blockcopolymere sind Polymere, die aus mehr als einer Art von Monomeren bestehen und dessen Moleküle in Blöcken linear verknüpft sind. Die Blöcke sind direkt oder durch Baueinheiten, die nicht Teil der Blöcke sind, miteinander verbunden. Bei diesem Verfahren wird ein A-B Diblockcopolymer zusammen mit einer bestimmten Menge Homopolymer B in einem-Lösemittel gelöst.

Durch kontrolliertes Abdampfen des Lösemittels lassen sich auf einer festen Unterlage, z.B. einem Silicium-Wafer, Filme bilden, die regelmäßig senkrecht zur Oberfläche angeordnete Zylinder aufweisen, die aus dem Block B und dem Homopolymer B bestehen. Aus diesen Filmen wird das Homopolymer B durch ein selektives Lösemittel herausgelöst, so dass ein nanoporöser Film entsteht. Der Film kann jetzt durch Wasser abgelöst und auf einen porösen Träger übertragen werden. Auf diese Weise entsteht eine Kompositmembran mit einer isoporösen Trennschicht. Dieses Verfahren ist durch die Vielzahl von Schritten sehr aufwändig. Membranen lassen sich nach diesem Verfahren im industriellen Maßstab nicht zu konkurrenzfähigen Preisen fertigen.

In US-A-4 160 791 ist die Herstellung eines Polyether-Polycarbonat-Blockcopolymers beschrieben, aus dem gelierte Polycarbonatmembranen zum Einsatz bei der Hämodialyse hergestellt werden. Hierbei werden Gießlösungen hergestellt, indem die Polyether-Polycarbonat-Blockcopolymere in einem wasserlöslichen organischen Lösungsmittel für das Copolymer gelöst werden. Die Polyether-Blöcke der Blockcopolymere dienen zur Hydrophilisierung der Oberflächen des hydrophoben Polycarbonats.

DE-A-42 41 479 offenbart semipermeable Membranen aus segmentierten N-Alkyl-Polyurethanamiden mit statistisch verteilten Bausteinen, sowie ein Verfahren zu ihrer Herstellung und ihre Verwendung. Zur Herstellung der Membranen nach dem Phaseninversionsverfahren werden aromatische Polykondensate in aprotischen, polaren Lösungsmitteln zu einer Gießlösung gelöst. Die Gießlösung wird auf einer Unterlage zu einem Film ausgebreitet, wobei anschließend gemäß dem Phaseninversionsverfahren ein Fällungsmittel auf den Film einwirkt, der eine dichte Haut ausbildet, und das mit dem aprotischen, polaren Lösungsmittel mischbar ist aber kein Lösungsmittel für das Polykondensat darstellt.

Roux et al., "Hydrophilisation of polysulfone ultrafiltration membranes by incorporation of branched PEO-block-PSU copolymers", Journal of Membrane Science 276 (2006), 8 - 15, betrifft die Herstellung von Ultrafiltrations- und Mikrofiltrationsmembranen aus Polysulfonen unter Verwendung von verzweigtem Polyethylenoxid (PEO), um die Hydrophilizität der Oberflächen von Polysulfonmembranen zu erhöhen.

In Hancock et al. "Hydrophilic, semipermeable membranes fabricated with poly(ethylene oxide)-polysulfone block copolymer", Biomaterials 21 (2000), 725 - 733, werden semipermeable Membranen, die aus Polyethylenoxid-Polysulfon-Blockcopolymeren hergestellt werden, beschrieben. Hierbei wird die Membran mittels des Phaseninversionsverfahrens nach Herstellen einer Gießlösung hergestellt. Die Polysulfon-Membranen werden an ihrer Oberfläche durch den Anteil an Polyethylenoxid hydrophilisiert.

Knoell et al., "Biofouling potentials of microporous polysulfone membranes containing a sulfonated polyether-ethersulfone/polyethersulfone block copolymer: correlation of membrane surface properties with bacterial attachment", Journal of Membrane Science, 157 (1999), 117 - 138, beschreibt modifizierte Polysulfonmembranen, die eine Mischung aus Polysulfonen mit sulfonierten Polyetherethersulfonen/Polyethersulfon-Blockcopolymeren aufweisen. Auch hier wird eine hydrophobe Membranoberfläche hydrophilisiert.

US-A-5 834 583 betrifft die Herstellung eines porösen Polymerartikels, der eine erhöhte Oberflächenhydrophilizität aufweist. Als Polymerartikel kommen dabei auch Membranen zur Mikrofiltration oder Ultrafiltration sowie zur Dialyse oder Osmose in Frage.

US-A-3 901 810 betrifft Ultrafiltrationsmembranen, die aus Lösungen mit segmentierten Graft- und Random-Blockcopolymeren, die hydrophile und hydrophobe Abschnitte aufweisen, hergestellt werden.

Aufgabe der vorliegenden Erfindung ist es, eine zur Ultrafiltration oder Nanofiltration von kolloidalen Partikeln oder Proteinen geeignete Membran sowie ein Verfahren zur Herstellung einer solchen Membran bereitzustellen, das in ihrer Herstellung kostengünstig und einfach ist.

Die Aufgabe wird erfindungsgemäß gelöst durch ein Verfahren nach Patentanspruch 1 sowie eine nach dem Verfahren hergestellte isoporöse integral-asymmetrische Polymermembran und deren Verwendung zur Ultrafiltration oder zur Nanofiltration, insbesondere von kolloidalen Partikeln oder Proteinen, nach den nebengeordneten Patentansprüchen.

Das erfindungsgemäße Verfahren beruht auf der Fähigkeit zur Selbstorganisation von Blockcopolymeren. Das Blockcopolymer wird dabei in einem Lösemittel-Gemisch gelöst, dem darüber hinaus Additive hinzugefügt werden können. Beispielsweise kann die Gießlösung neben einem Lösemittel auch ein oder mehrere Nichtlösemittel enthalten.

Aus dieser Lösung wird ein Film ausgestrichen. Nach einer kurzen Abdampfzeit wird der Film in ein Nichtlösemittel getaucht, wodurch es zur Ausfällung des Polymerfilms kommt. Überraschenderweise hat sich herausgestellt, dass sich bei Durchführung des erfindungsgemäßen Verfahrens eine asymmetrische Membran herausbildet, deren Trennschicht Poren mit einer geringen Streuung der Verteilung der Porengröße enthält.

Als gleichbedeutend mit einer geringen Streuung der Verteilung der Porengröße wird angesehen, dass die Verteilung der Porendurchmesser eine geringe Streuung aufweist. Man spricht in diesem Fall auch von isoporösen Membranen, d.h. von Membranen, die im Wesentlichen Poren mit gleichem Durchmesser aufweisen.

Das Besondere an dem erfindungsgemäßen Verfahren ist, das die Neigung zur Selbstorganisation von maßgeschneiderten Blockcopolymeren in regelmäßigen, mikrophasenseparierten Strukturen mit einem gesteuerten Entmischungsprozess durch Zugabe von einem Nichtlösungsmittel kombiniert wird. Es werden also verschiedene thermodynamische Effekte simultan ausgelöst, was zu der besonderen integral-asymmetrischen Struktur führt, bei welcher die trennaktive Oberfläche der Membran auf der typischen Mikrophasenmorphologie des Blockcopolymeren oder eines Blends mit Blockcopolymeren beruht, wobei diese Morphologie nahtlos in eine schwammartige, typische Struktur einer integral-symmetrischen Membran übergeht. Hierdurch ist ein optimaler Verbund zwischen Trennschicht und mechanischer Stützschicht in einem Schritt realisiert.

Das Verfahren ist einfach und kann ohne Probleme auf existierende, industrielle Membranfertigungsanlagen übertragen werden.

Bevorzugte Ausführungsform des Verfahrens sind Gegenstand der Unteransprüche.

Das wenigstens eine Blockcopolymer umfasst eine Struktur der Form A-B oder A-B-A oder A-B-C, wobei A oder B oder C jeweils Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid oder Poly-N-alkylacrylamid ist.

Als bevorzugtes Lösungsmittel wird Dimethylformamid und/oder Dimethylacetamid und/oder N-Methylpyrrolidon und/oder Dimethylsulfoxid und/oder Tetrahydrofuran verwendet.

In einer weiteren bevorzugten Ausführungsform des Verfahrens wird als Fällbad Wasser und/oder Methanol und/oder Ethanol und/oder Aceton verwendet.

Vorzugsweise beträgt die Konzentration des einen oder der mehreren in der Gießlösung gelösten Polymere in der Gießlösung zwischen 5 und 30 Gew.%, vorzugsweise zwischen 10 und 25 Gew.%.

In einer bevorzugten Ausführungsform der Membran beträgt die Dichte von Oberflächenporen der Membran mindestens 10⁸ Poren / cm².

Die Durchmesser der Oberflächenporen erfüllen im Wesentlichen die Bedingung, dass das Verhältnis des maximalen Durchmessers dₘₐₓ zu dem minimalen Durchmesser dₘᵢₙ kleiner als drei ist.

Mit besonderem Vorteil wird das Verhältnis des maximalen Durchmessers dₘₐₓ zum minimalen Durchmesser dₘᵢₙ kleiner als D gewählt, wobei D eine Größe zwischen eins und drei ist. D ist beispielsweise 1,1, 1,2, 1,3, 1,4, 1,5, 1,6, 1,7, 1,8, 1,9 oder 2. Ebenso denkbar ist D gleich 2,1, 2,2, 2,3, 2,4, 2,5, 2,6, 2,7, 2,8 oder 2,9.

Die Erfindung wird nachstehend ohne Beschränkung des allgemeinen Erfindungsgedankens anhand eines Ausführungsbeispiels und anhand von Zeichnungen beschrieben, auf die bezüglich der Offenbarung aller im Text nicht näher erläuterten erfindungsgemäßen Einzetheiten ausdrücklich verwiesen wird.

### Beispiel:

Ein Blockcopolymer, bestehend aus Polystyrol-b-Poly-4-Vinylpyridin wird in einer Mischung aus Dimethylformamid und Tetrahydrofuran gelöst. Die Zusammensetzung der Lösung beträgt dabei:
- 20 Gew.% Polystyrol-b-Poly-4-vinylpyridin (PS-b-P4VP)
- 20 Gew.% Tetrahydrofuran (THF)
- 60 Gew.% Dimethylformamid (DMF)

Diese Lösung wird mit einem Rakel zu einem 200 µm dicken Film auf einer Glasplatte ausgestrichen. Nach 10 Sekunden wird der Film in ein Wasserbad getaucht. Nach einer Stunde wird der Film entnommen und an der Luft getrocknet.

Es zeigen
- Fig. 1: den oberen Bereich des Querschnittes des Films aus dem Beispiel in 20.000 facher Vergrößerung. Hierbei sind an der Oberfläche deutlich die zylinderartigen Poren zu erkennen;
- Fig. 2: zeigt die Membranoberfläche aus dem Beispiel in 10.000 facher Vergrößerung;
- Fig. 3: zeigt die Membranoberfläche des Beispiels in 50.000 facher Vergrößerung.

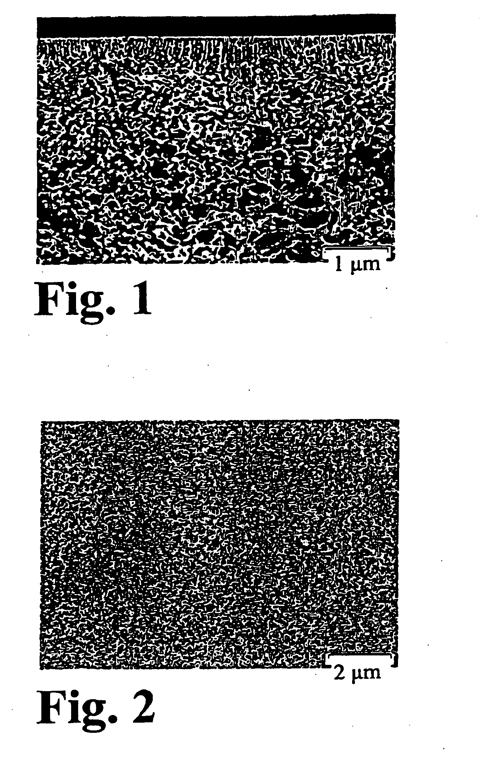

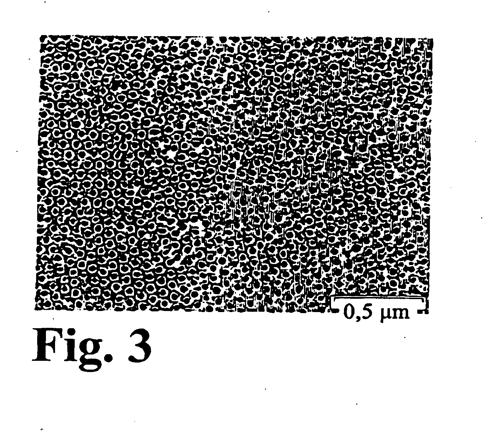

In den Figuren 2 und 3 sind jeweils die Oberflächenporen gleichen Durchmessers in hoher Dichte zu erkennen.

## Patentansprüche

1. Verfahren zur Herstellung einer isoporösen integral-asymmetrischen Polymermembran, nämlich einer Ultrafiltrationsmembran oder Nanofiltrationsmembran, wobei die Durchmesser der Oberflächenporen im Wesentlichen die Bedingung erfüllen, dass das Verhältnis des maximalen Durchmessers dₘₐₓ zu dem minimalen Durchmesser dₘᵢₙ kleiner als drei ist, bei der eine trennaktive Oberfläche der Membran auf einer regelmäßigen selbstorganisierten Mikrophasenmorphologie des maßgeschneiderten Blockcopolymers oder eines Blends mit maßgeschneiderten Blockcopolymeren beruht, wobei diese Morphologie nahtlos in eine schwammartige Struktur einer integral-symmetrischen Membran übergeht, in folgenden Schritten:
- Lösen von einem oder mehreren Polymeren, von denen wenigstens ein Polymer ein Blockcopolymer ist, in einer Gießlösung, umfassend mehrere Lösemittel,
- Ausstreichen der Gießlösung mit dem einen oder den mehreren darin gelösten Polymeren zu einem Film,
- nach einer kurzen Abdampfzeit Eintauchen des Films in ein Fällbad, umfassend wenigstens ein Nichtlösemittel für das Blockcopolymer, so dass der Film zu einer Membran ausgefällt oder hergestellt wird,
wobei das wenigstens eine Blockcopolymer eine Struktur der Form A-B oder A-B-A oder A-B-C umfasst, wobei A oder B oder C jeweils Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid oder Poly-N-alkylacrylamid ist.

2. Verfahren nach Anspruch 1, **dadurch gekennzeichnet, dass** als Lösemittel Dimethylformamid und/oder Dimethylacetamid und/oder N-Methylpyrrolidon und/oder Dimethylsulfoxid und/oder Tetrahydrofuran verwendet wird.

3. Verfahren nach Anspruch 1 oder 2, **dadurch gekennzeichnet, dass** als Fällbad Wasser und/oder Methanol und/oder Ethanol und/oder Aceton verwendet wird.

4. Verfahren nach einem der Ansprüche 1 bis 3, **dadurch gekennzeichnet, dass** die Konzentration des einen oder der mehreren in der Gießlösung gelösten Polymere in der Gießlösung zwischen 5 und 30 Gew.%, vorzugsweise zwischen 10 und 25 Gew.%, liegt.

5. Isoporöse integral-asymmetrische Polymermembran, nämlich Ultrafiltrationsmembran oder Nanofiltrationsmembran, hergestellt nach einem Verfahren nach einem der Ansprüche 1 bis 4, bei der eine trennaktive Oberfläche der Membran auf einer regelmäßigen selbstorganisierten Mikrophasenmorphologie des maßgeschneiderten Blockcopolymers oder eines Blends mit maßgeschneiderten Blockcopolymeren beruht, wobei diese Morphologie nahtlos in eine schwammartige Struktur einer integral-symmetrischen Membran übergeht, wobei die Durchmesser der Oberflächenporen im Wesentlichen die Bedingung erfüllen, dass das Verhältnis des maximalen Durchmessers dₘₐₓ zu dem minimalen Durchmesser dₘᵢₙ kleiner als drei ist..

6. Membran nach Anspruch 5, **dadurch gekennzeichnet, dass** die Dichte von Oberflächenporen der Membran mindestens 10⁸ Poren / cm² beträgt.

7. Verwendung einer isoporösen integral-asymmetrischen Polymermembran nach einem der Ansprüche 5 oder 6 zur Ultrafiltration oder zur Nanofiltration, insbesondere von kolloidalen Partikeln oder Proteinen.

## Claims

1. A method for the production of an isoporous integral-asymmetrical polymer membrane, namely an ultrafiltration membrane or a nanofiltration membrane, wherein the diameter of the surface pores substantially fulfil the condition that the ratio of the maximum diameter dₘₐₓ to the minimal diameter dₘᵢₙ is smaller than three, in which a separation-active surface of the membrane is based on a regular self-organised microphase morphology of the tailor-made block copolymer or a blend with tailor-made block copolymers, wherein this morphology passes seamlessly into a sponge-like structure of an integral-symmetric membrane, in the following steps:
- dissolving one or more polymers, of which at least one polymer is a block copolymer, in a casting solution comprising a number of solvents,
- spreading the casting solution out with the one or more polymers dissolved therein to form a film,
- after a short evaporation period, dipping the film into a precipitation bath comprising at least one non-solvent for the block copolymer so that the film is precipitated out or made into a membrane,
wherein the at least one block copolymer includes a structure of the form A-B or A-B-A or A-B-C, wherein A or B or C is in each case polystyrene, poly-4-vinylpyridine, poly-2-vinylpyridine, polybutadiene, polyisoprene, poly(ethylenestat-butylene), poly(ethylene-alt-propylene), polysiloxane, polyalkyleneoxide, poly-ε-caprolactone, polylactide, polyalkylmethacrylate, polymethacrylic acid, polyaklylacrylate, polyacrylic acid, polyhydroxyethylmethacrylate, polyacrylamide, or poly-N-alkylacrylamide.

2. A method as claimed in Claim 1, **characterised in that** dimethylformamide and/or dimethylacetamide and/or N-Methylpyrrolidone and/or dimethylsulfoxide and/or tetrahydrofurane is used as the solvent.

3. A method as claimed in Claim 1 or 2, **characterised in that** water and/or methanol and/or ethanol and/or acetone is used as the precipitation bath.

4. A method as claimed in one of Claims 1 to 3, **characterised in that** the concentration of the one or more polymers dissolved in the casting solution is between 5 and 30 wt.%, preferably between 10 and 25 wt.%.

5. An isoporous integral-asymmetric polymer membrane, namely an ultrafiltration membrane or a nanofiltration membrane, produced by a method as claimed in one of Claims 1 to 4, in which a separation-active surface of the membrane is based on a regular self-organised microphase morphology of the tailor-made block copolymer or a blend with tailor-made block copolymers, wherein this morphology passes seamlessly into a sponge-like structure of an integral-symmetric membrane, wherein the diameters of the surface pores substantially fulfil the condition that the ratio of the maximum diameter dₘₐₓ to the minimum diameter dₘᵢₙ is smaller than 3.

6. A membrane as claimed in Claim 5, **characterised in that** the density of surface pores in the membrane is at least 10⁸ pores/cm².

7. Use of an isoporous integral-asymmetric polymer membrane as claimed in one of Claims 5 or 6 for ultrafiltration or for nanofiltration, particularly of colloidal particles or proteins.

## Revendications

1. Procédé de fabrication d'une membrane polymère intégrale asymétrique isoporeuse, notamment d'une membrane d'ultrafiltration ou d'une membrane de nano-filtration, dans laquelle les pores de la surface de la membrane ont un diamètre déterminé de manière à ce que le rapport entre le diamètre maximal dₘₐₓ et le diamètre minimal dₘᵢₙ soit inférieur à trois, dans laquelle une surface de séparation active de la membrane est construite sur une morphologie en micro phase auto-organisée et régulière de copolymères de mesure ou par le mélange de copolymères de mesure adaptés à cette structure, cette morphologie permettant de fusionner une membrane intégrale asymétrique en une structure semblable à une éponge, le procédé comprenant les étapes suivantes :
- dissolution d'un ou de plusieurs polymères dans une solution de revêtement comprenant une pluralité de solvants, au moins un polymère étant un copolymère,
- étalage de la solution de revêtement, dans laquelle un ou plusieurs polymères ont été dissous, afin de former un film, et
- transformation du film en membrane après évaporation de la solution de trempage comprenant au moins un non-solvant pour le copolymère, le film ayant été trempé dans un bain de précipitation;
dans lequel le copolymère comprend au moins une structure de la forme A-B ou A-B-A ou A-B-C dans laquelle A ou B ou C, sont respectivement, du polystyrène, du poly-4-vinylpyridine, du poly-2-vinylpyridine, du polybutadiène, du polyisoprène, du poly (éthylène-butylène-state) du poly (éthylène-alt-propylene), du polysiloxane, de l'oxyde de polyalkylène, du polycaprolactone, de l'acide polylactique, du méthacrylate d'alkyle, de l'acide méthacrylique, du d'acrylate d'alkyle, de l'acide polyacrylique, du polyméthacrylate d'hydroxyéthyle, du polyacrylamide ou du poly-N-alkyl acrylamide.

2. Procédé selon la revendication 1, **caractérisé en ce que** du diméthylformamide et / ou du diméthylsulfoxyde et / ou du tétrahydrofurane et / ou du N-méthylpyrrolidone est(sont) utilisé(s) comme solvant(s).

3. Procédé selon la revendication 1 ou la revendication 2, **caractérisé en ce que** de l'eau et / ou du méthanol et / ou de l'éthanol et / ou de l'acétone est(sont) utilisé(s) pour le bain de précipitation.

4. Procédé selon l'une quelconque des revendications 1 à 3, **caractérisé en ce que** la concentration d'un ou de plusieurs polymères dissous dans la solution de revêtement est comprise entre 5 et 30% en poids, de préférence entre 10 et 25% en poids de la solution de revêtement.

5. Membrane polymère intégrale asymétrique isoporeuse, notamment une membrane d'ultrafiltration ou une membrane de nano-filtration, fabriquée par le procédé selon l'une quelconque des revendications 1 à 4, **caractérisée en ce que** la surface de séparation active de la membrane est construite sur une morphologie en micro-phase auto-organisée et régulière de copolymères de mesure ou sur le mélange de copolymères de mesure adaptés à cette structure, cette morphologie permettant de fusionner une membrane intégrale asymétrique en une structure semblable à une éponge, les pores de la surface de la membrane ayant un diamètre déterminé de manière à ce que le rapport entre le diamètre maximal dₘₐₓ et le diamètre minimal dₘᵢₙ soit inférieur à trois.

6. Membrane selon la revendication 5, **caractérisée en ce que** la densité des pores sur la surface de la membrane est d'au moins 10⁸ pores / cm².

7. Utilisation d'une membrane polymère asymétrique intégrale isoporeuse selon la revendication 5 ou la revendication 6 en tant que membrane d'ultrafiltration ou membrane de nanofiltration, en particulier pour la filtration des particules colloïdales ou des protéines.
